# EUROPÄISCHE PATENTANMELDUNG

(11) **EP 3 296 271 A1**
(43) Veröffentlichungstag der Anmeldung: **21.03.2018**
(21) Anmeldenummer: 17001214.0
(22) Anmeldetag: 17.07.2017
(51) Int. Cl.: C03B 9/453

(54) **WINDBOX ZUR KÜHLUNG VON MITTELS EINES GREIFERMECHANISMUS AUS FERTIGFORMEN EINER BEHÄLTERGLASMASCHINE AUF EINE ABSTELLPLATTE DERSELBEN UMGESETZTEN UND ABGESTELLTEN GLASBEHÄLTERN**

(30) Priorität: 20.09.2016 DE 202016005746 U
(71) Anmelder: Rolf Themann & Partner SA, 1273 Luxembourg (LU)
(72) Erfinder: Donát, Václav, 51261 Prepere (CZ); Zalský, Stépán, 51301 Semily (CZ)
(74) Vertreter: Lelgemann, Karl-Heinz

(57) **Zusammenfassung**

Eine Windbox (1) zur Kühlung von mittels eines Greifermechanismus aus Fertigformen einer Behälterglasmaschine auf eine Abstellplatte (2) derselben umgesetzten und abgestellten Glasbehältern ist unterhalb der Abstellplatte (2) angeordnet.

Um eine derartige Windbox (1) zur Verfügung zu stellen, mittels der Kühlluft eingespart und die auf der Abstellplatte (2) befindlichen Glasbehälter anforderungsgerecht kühlbar sind, wird vorgeschlagen, dass die Windbox (1) so ausgebildet ist, dass jeder auf der Abstellplatte (2) befindliche Glasbehälter gleichmäßig kühlbar ist.

## Beschreibung

Die Erfindung bezieht sich auf eine Windbox zur Kühlung von mittels eines Greifermechanismus aus Fertigformen einer Behälterglasmaschine auf eine Abstellplatte derselben umgesetzten und abgestellten Glasbehältern, wobei die Windbox unterhalb der Abstellplatte angeordnet ist.

Die Kühlung der auf der Abstellplatte abgestellten Glasbehälter findet statt, bis ein sogenannter E-Puscher die Glasbehälter von der Abstellplatte auf ein Transportband schiebt. Während der Zeit auf der Abstellplatte müssen die Glasbehälter vorzugsweise von unten her gekühlt werden. Ohne diese erste Kühlung fielen viele Glasbehälter einfach in sich zusammen, da sie noch zu heiß sind, um ohne Unterstützung aufrecht stehen zu können.

Je nach Ausgestaltung der Behälterglasmaschine können auf einer derartigen Abstellplatte, die oberhalb der Windbox angeordnet ist, ein bis fünf Glasbehälter gekühlt werden. Üblicherweise ist jeder Station einer Behälterglasmaschine eine Windbox sowie eine auf der Windbox angeordnete Abstellplatte zugeordnet.

Aus dem Stand der Technik sind technische Lösungen für die Kühlung der auf der Abstellplatte befindlichen Glasbehälter bekannt, bei denen die Kühlung manuell eingestellt wird, wobei sämtliche auf einer Abstellplatte befindliche Glasbehälter in gleicher Weise mit Kühlluft beaufschlagt werden. Des Weiteren sind technische Lösungen bekannt, bei denen Kühlklappen mittels Ventilen oder Schrittmotoren auf- und zugesteuert werden, wobei jedoch die entsprechenden Auf- und Zustellbewegungen jeweils sämtliche auf der Abstellplatte befindliche Glasbehälter in gleicher Weise betreffen.

Nachteilhaft bei den aus dem Stand der Technik bekannten technischen Lösungen ist, dass in hohem Ausmaß Kühlluft dauerhaft verloren geht, was auf die manuelle Einstellung der Kühlluftbeaufschlagung zurückzuführen ist, und darauf, dass die Kühlluftbeaufschlagung der betreffenden Abstellplatte auch dann aufrecht erhalten wird, wenn auf der Abstellplatte keine Glasbehälter abgestellt sind.

Ausgehend von dem vorstehend geschilderten Stand der Technik liegt der Erfindung die Aufgabe zugrunde, eine Windbox der eingangs geschilderten gattungsgemäßen Art zur Verfügung zu stellen, mittels der Kühlluft eingespart und die auf der Abstellplatte befindlichen Glasbehälter anforderungsgerecht kühlbar sind.

Diese Aufgabe wird erfindungsgemäß dadurch gelöst, dass die Windbox so ausgebildet ist, dass jeder auf der Abstellplatte befindliche Glasbehälter - unabhängig von seiner Position auf der Abstellplatte - gleichmäßig kühlbar ist. Diejenigen Glasbehälter, die in einem inneren Bereich bzw. zentral auf der Abstellplatte angeordnet sind und die daher von außerhalb des Zentralbereichs angeordneten, auf der Abstellplatte abgestellten Glasbehältern umgeben sind, haben typischerweise höhere Temperaturen, was beim Betrieb der Windbox berücksichtigt werden muss. Entsprechend müssen mittig bzw. zentral auf der Abstellplatte angeordnete Glasbehälter stärker mit Kühlluft beaufschlagt werden, um gleiche Bedingungen für alle auf der Abstellplatte abgestellten Glasbehälter zu erreichen. Für die höhere Temperatur der mittig angeordneten Glasbehälter ist u.a. die Strahlungswärme der benachbarten Glasbehälter ursächlich. Durch die erfindungsgemäße Ausgestaltung der Windbox kann sichergestellt werden, dass jeder auf der Abstellplatte befindliche Glasbehälter unter Berücksichtigung seiner Temperatur gleichmäßig abgekühlt wird.

Hierzu weist die erfindungsgemäße Windbox gemäß einer vorteilhaften Ausführungsform vorteilhaft eine Verstelleinrichtung auf, die mit der Windbox verbunden ist und mittels der die Windbox so ein- bzw. verstellbar ist, dass jeder auf der Abstellplatte befindliche Glasbehälter individuell kühlbar ist. Um dies mit einem vergleichsweise geringen technischkonstruktiven Aufwand zu realisieren, ist die mechanische Verbindung zwischen der Verstelleinrichtung einerseits und der Windbox andererseits mittels Seil- oder Drahtzügen realisiert.

Vorteilhaft sind diese Seil- oder Drahtzüge in geschützten Zügen angeordnet, um - angesichts der schwierigen Umgebungsbedingungen - dauerhaft ihren sicheren und zuverlässigen Betrieb gewährleisten zu können.

Gemäß einer vorteilhaften Ausgestaltung der erfindungsgemäßen Windbox ist diese in einzelne Kammern aufgeteilt, wobei die Anzahl der Kammern der Anzahl der auf der der Windbox zugeordneten Abstellplatte abstellbaren Glasbehälter entspricht. Durch entsprechende Kühlluftbeaufschlagung jeder einzelnen Kammer, die mittels der Verstelleinrichtung realisierbar ist, kann jeder Glasbehälter entsprechend seiner Temperatur und seiner jeweiligen Position auf der Abstellplatte mit Kühlluft beaufschlagt werden.

Zweckmäßigerweise ist die Verstelleinrichtung in zwei Verstellbereiche aufgeteilt, wobei jeder Verstellbereich zur Befriedigung unterschiedlicher Anforderungsprofile ausgestaltet sein kann.

Wenn mittels des einen Verstellbereichs der Verstelleinrichtung für jede einen Abschnitt der Abstellplatte bzw. dem darauf abgestellten Glasbehälter zugeordnete Kammer der Windbox über eine dieser Kammer, vorzugsweise in deren unterem Bereich, zugeordnete erste Luftklappe eine Grundeinstellung vorgebbar ist, kann eine Grundeinstellung für die Kühlluftbeaufschlagung des der betreffenden Kammer zugeordneten Glasbehälters vorgenommen werden, die an das Temperaturniveau des betreffenden Glasbehälters angepasst ist.

Wenn mittels des anderen Verstellbereichs der Verstelleinrichtung für jede einen Abschnitt der Abstellplatte bzw. dem darauf abgestellten Glasbehälter zugeordneten Kammer der Windbox über eine dieser Kammer, vorzugsweise in deren oberem Bereich, zugeordnete zweite Luftklappe eine Individualeinstellung vorgebbar ist, kann beispielsweise die Kühlluftbeaufschlagung des dieser Kammer zugeordneten Glasbehälters entsprechend der von anderen Glasbehältern auf ihn einwirkenden Abstrahlwärme individuell für diesen Glasbehälter eingestellt werden.

Vorteilhaft kann jeder zweiten Luftklappe der Windbox ein Steuer- bzw. Regelventil zugeordnet werden, das mittels einer Steuervorrichtung der Behälterglasmaschine steuer- bzw. regelbar ist, so dass in Abhängigkeit von bestimmten Parametern eine individuelle Kühlluftbeaufschlagung des jeweiligen Glasbehälters automatisch realisierbar ist.

Zweckmäßigerweise weist die erfindungsgemäße Windbox eine Messvorrichtung auf, mittels der in jeder ihrer Kammern der Luftdruck und/oder der Volumenstrom der Kühlluft messbar ist.

Zum Messen des Luftdrucks und/oder des Volumenstroms sind vorteilhaft Manometer bzw. Durchflussmesser vorgesehen, deren Messwerte an der Verstelleinrichtung ablesbar sind. Falls irgendwelche Unregelmäßigkeiten etc. durch eine die Verstelleinrichtung bedienende Person erfasst werden, kann dann unmittelbar reagiert werden.

Zweckmäßigerweise sind die erste und die zweite Luftklappe jeder Kammer der Windbox vertikal unterhalb der Vertikalachse des der jeweiligen Kammer zugeordneten Glasbehälters angeordnet, wobei jeder Glasbehälter durch in der Abstellplatte ausgebildete Kühlbohrungen mit Kühlluft beaufschlagbar ist.

Gemäß einer weiteren vorteilhaften Ausführungsform der erfindungsgemäßen Windbox sind Verstellhebel des einen Verstellbereichs der Verstelleinrichtung den ersten bzw. unteren Luftklappen der Kammern der Windbox zugeordnet.

Entsprechend können gemäß einer weiteren vorteilhaften Ausführungsform der erfindungsgemäßen Windbox die Verstellhebel des anderen Verstellbereichs der Verstelleinrichtung den zweiten bzw. oberen Luftklappen der Kammern der Windbox zugeordnet sein.

Um in einfacher Weise sowohl die Grundeinstellung als auch die individuelle Einstellung der Kühlluftbeaufschlagung jedes auf der Abstellplatte befindlichen Glasbehälters bewerkstelligen zu können, ist es vorteilhaft, wenn jeder ersten bzw. unteren Luftklappe und jeder zweiten bzw. oberen Luftklappe der Windbox jeweils ein Verstellhebel des einen Verstellbereichs bzw. ein Verstellhebel des anderen Verstellbereichs der Verstelleinrichtung zugeordnet ist.

Im Folgenden wird die Erfindung anhand einer Ausführungsform unter Bezugnahme auf die Zeichnung näher erläutert.

Es zeigen:
- Figur 1: eine perspektivische Prinzipdarstellung einer Ausführungsform einer erfindungsgemäßen Windbox zur Kühlung von mittels eines Greifermechanismus aus einer Fertigform einer Behälterglasmaschine auf eine Abstellplatte derselben umgesetzten und abgestellten Glasbehältern mit der ihr zugeordneten Verstelleinrichtung;
- Figur 2: eine perspektivische Darstellung der in Figur 1 gezeigten Windbox ohne Verstelleinrichtung und ohne Abstellplatte;
- Figur 3: eine perspektivische Darstellung einer Ausführungsform der Verstelleinrichtung der in den Figuren 1 und 2 gezeigten Windbox; und
- Figur 4: eine Prinzipdarstellung einer einer Kammer der Windbox zugeordneten Luftklappenanordnung in einer Ausführungsform.

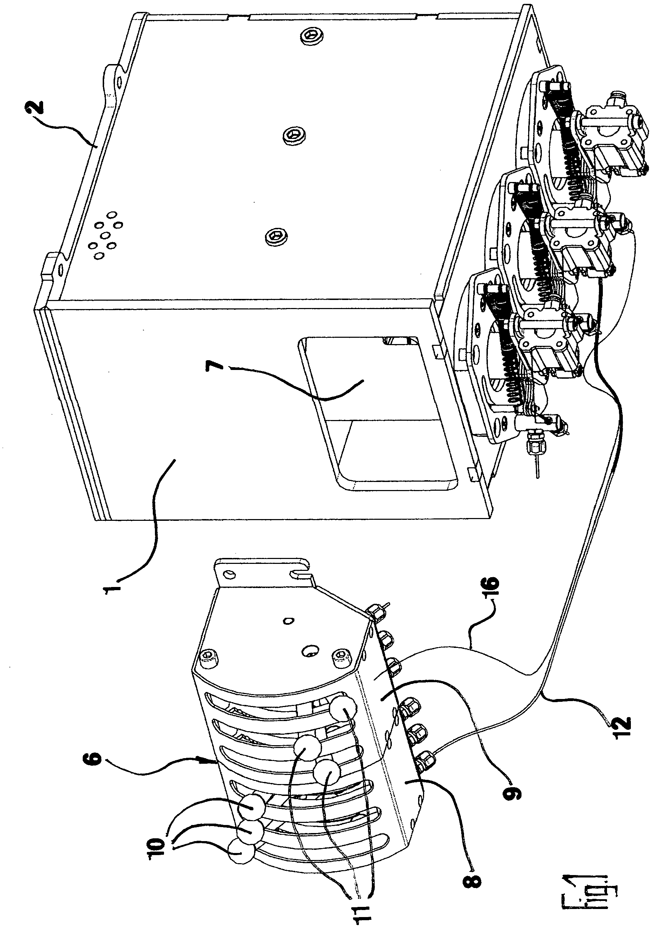

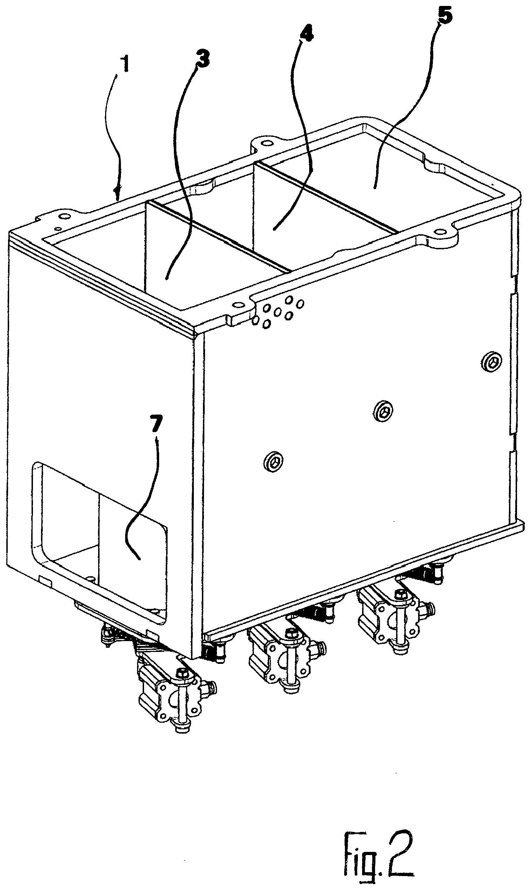

Eine in Figur 1 anhand eines erfindungsgemäßen Ausführungsbeispiels prinzipiell dargestellte Windbox 1 dient der Kühlung von in den Figuren nicht dargestellten Glasbehältern, die von einem in der Figur ebenfalls nicht dargestellten Greifermechanismus einer Fertigform einer Behälterglasmaschine entnommen und dann auf eine oberhalb der Windbox 1 angeordnete Abstellplatte abgesetzt werden. Es sei darauf hingewiesen, dass im dargestellten Ausführungsbeispiel die Windbox 1 drei Kammern 3, 4, 5 aufweist, die, wie sich insbesondere aus Figur 2 ergibt, etwa die gleichen Abmessungen haben und denen jeweils ein Bereich der oberhalb der Windbox 1 angeordneten Abstellplatte 2 zugeordnet ist.

Entsprechend hat die in Figur 1 dargestellte Abstellplatte 2 drei Bereiche bzw. Abschnitte, auf denen mittels des Greifermechanismus jeweils ein in den Figuren nicht dargestellter Glasbehälter abgesetzt wird.

An dieser Stelle sei darauf hingewiesen, dass bei entsprechender Ausgestaltung der Station der Behälterglasmaschine eine bis fünf Kammern je Windbox 1 vorgesehen sein können, wobei dann auf der dieser Windbox 1 zugeordneten Abstellplatte 2 entsprechend ein bis fünf Glasbehälter auf ein bis fünf Bereichen der Abstellplatte 2 absetzbar sind.

Der Windbox 1 ist, wie insbesondere aus Figur 1 hervorgeht, eine Verstelleinrichtung 6 zugeordnet. Mittels der Verstelleinrichtung 6 sind im Folgenden noch beschriebene, in den Kammern 3, 4, 5 der Windbox 1 angeordnete Luftklappenanordnungen 7 ver- bzw. einstellbar.

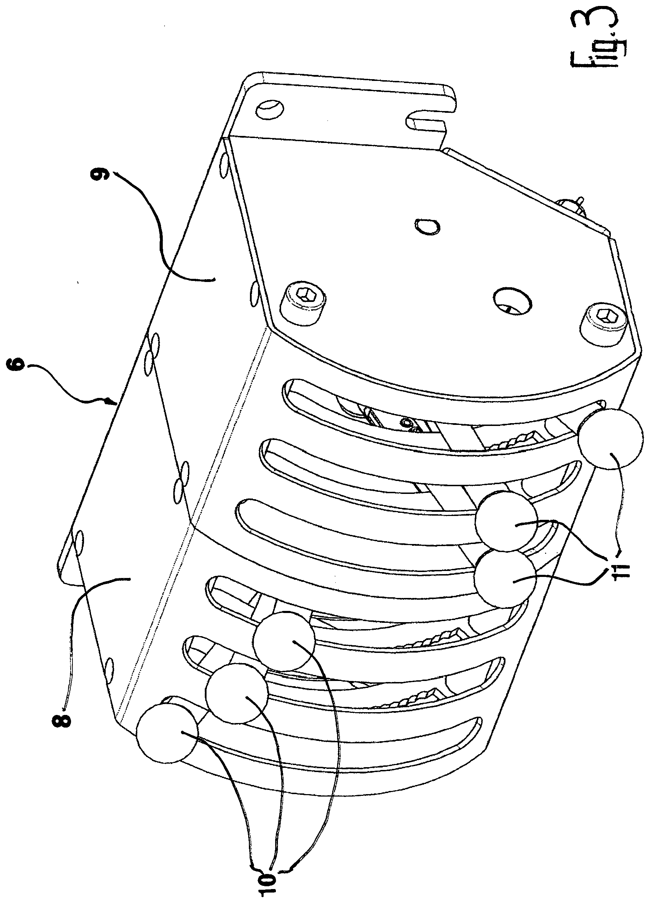

Die Verstelleinrichtung 6 hat im dargestellten Ausführungsbeispiel, bei dem sie der Windbox 1 mit den drei Kammern 3, 4, 5 zugeordnet ist, einen ersten Verstellbereich 8 und einen zweiten Verstellbereich 9. Der erste Verstellbereich 8 hat drei Verstellhebel 10 und entsprechend hat der zweite Verstellbereich 9 drei Verstellhebel 11, wie dies am besten aus den Figuren 1 und 3 hervorgeht, die ebenfalls die Unterteilung der Verstelleinrichtung 6 in den ersten 8 und zweiten Verstellbereich 9 deutlich machen.

Die Verstelleinrichtung 6 ist unterhalb eines in den Figuren 1 bis 4 nicht gezeigten Fertigformbedienbalkens der Behälterglasmaschine angeordnet. An der Verstelleinrichtung 6 können Anzeigeeinheiten vorgesehen sein, mittels denen der in jeder der Kammern 3, 4, 5 der Windbox 1 aktuelle Luftdruck sowie aktuelle Volumenstrom darstellbar sind, wobei hierzu in den Kammern 3, 4, 5 der Windbox 1 entsprechend Manometer und Durchflussmesser installiert sind.

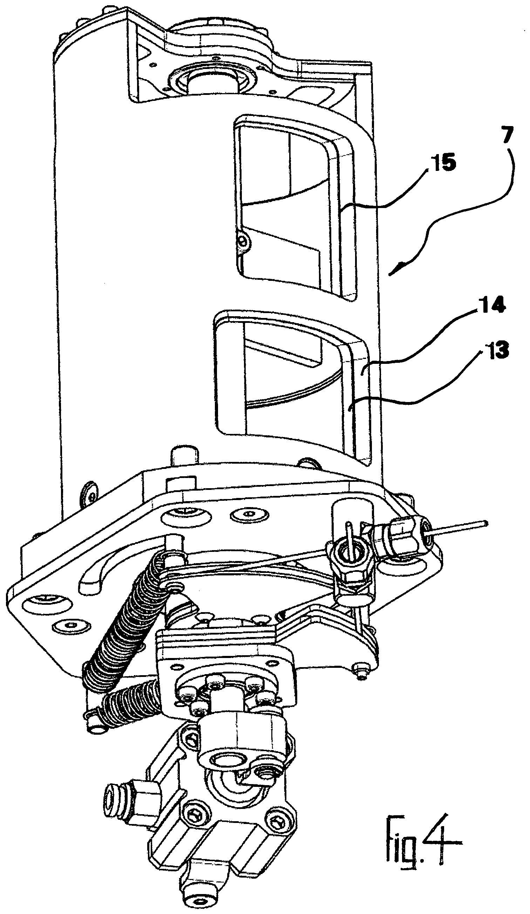

Die Verstellhebel 10 des in den Figuren 1 und 3 linken ersten Verstellbereichs 8 der Verstelleinrichtung 6 sind über Seil- oder Drahtzüge 12, von denen in Figur 1 aus Übersichtlichkeitsgründen lediglich ein einziger dargestellt ist, mit unteren bzw. ersten Luftklappen 13 der in Figur 4 gezeigten Luftklappenanordnung 7 verbunden, wobei je Kammer 3, 4, 5 der Windbox 1 eine derartige Luftklappenanordnung 7 vorgesehen ist.

Entsprechend ist diese untere, erste Luftklappe 13 der Luftklappenanordnung 7 mittels des ihr zugeordneten Verstellhebels 10 des ersten Verstellbereichs 8 der Verstelleinrichtung 6 zwecks Vorgabe einer Grundeinstellung für den der betreffenden Kammer 3, 4, 5 zugeordneten Kühlluftstrom einstellbar. Mittels der unteren, ersten Luftklappe 13 kann eine in Figur 4 gezeigte Luftklappenöffnung 14 durch Verstellung des der Luftklappe 13 zugeordneten Verstellhebels 10 je nach Anforderungsprofil für die Grundeinstellung der Kühlluftbeaufschlagung des sich oberhalb der Kammer 3, 4, 5 auf der Abstellplatte 2 befindlichen Glasbehälters eingestellt werden.

Entsprechend kann eine obere zweite Luftklappe 15 der Luftklappenanordnung 7 mittels eines Verstellhebels 11 des zweiten Verstellbereichs 9 der Verstelleinrichtung 6 verstellt werden, wobei die Verstellhebel 11 des zweiten Verstellbereichs 9 der Verstelleinrichtung 6, wie sich aus Figur 1 ergibt, mittels Seil- oder Drahtzügen 16, von denen in Figur 1 aus Übersichtlichkeitsgründen lediglich ein einziger dargestellt ist, mit den entsprechenden oberen zweiten Luftklappen 15 verbunden sind. Der zweite Verstellbereich 9 der Verstelleinrichtung 6 ist in den Figuren 1 und 3 rechts dargestellt.

Mittels der oberen zweiten Luftklappen 15 der in den Kammern 3, 4, 5 der Windbox 1 vorgesehenen Luftklappenanordnungen 7 kann für jeden auf der oberhalb der Windbox 1 angeordneten Abstellplatte 2 befindlichen Glasbehälter die Kühlluftbeaufschlagung individuell eingestellt werden. Entsprechend kann ein auf der Abstellplatte 2 außen angeordneter Glasbehälter anders mit Kühlluft beaufschlagt werden als ein auf der Abdeckplatte 2 mittig bzw. zentral angeordneter Glasbehälter, der in weitaus größerem Ausmaß von der Abstrahlwärme benachbarter Glasbehälter beaufschlagt wird als die außen angeordneten Glasbehälter.

Die individuelle Beaufschlagung jeder Kammer 3, 4, 5 der Windbox 1 durch die oberen zweiten Luftklappen 15 der Luftklappenanordnung 7 kann z.B. mittels eines Ventils realisiert werden, das durch eine Steuervorrichtung der Behälterglasmaschine angesteuert wird und kontrolliert und geregelt jeweils einen Start- und Stopp-Impuls abgibt.

## Patentansprüche

1. Windbox zur Kühlung von mittels eines Greifermechanismus aus Fertigformen einer Behälterglasmaschine auf eine Abstellplatte (2) derselben umgesetzten und abgestellten Glasbehältern, wobei die Windbox (1) unterhalb der Abstellplatte (2) angeordnet ist, **dadurch gekennzeichnet, dass** die Windbox (1) so ausgebildet ist, dass jeder auf der Abstellplatte (2) befindliche Glasbehälter gleichmäßig kühlbar ist.

2. Windbox nach Anspruch 1, mit einer Verstelleinrichtung (6), die mit der Windbox (1) verbunden ist und mittels der die Windbox (1) so ein- bzw. verstellbar ist, dass jeder auf der Abstellplatte (2) befindliche Glasbehälter individuell kühlbar ist.

3. Windbox nach Anspruch 2, bei der die mechanische Verbindung zwischen der Verstelleinrichtung (6) einerseits und der Windbox (1) andererseits mittels Seil- oder Drahtzügen (12, 16) realisiert ist.

4. Windbox nach Anspruch 3, deren Seil- oder Drahtzüge (12, 16) in geschützten Zügen angeordnet sind.

5. Windbox nach einem der Ansprüche 1 bis 4, die in einzelne Kammern (3, 4, 5) aufgeteilt ist, wobei die Anzahl der Kammern (3, 4, 5) der Anzahl der auf der der Windbox (1) zugeordneten Abstellplatte (2) abstellbaren Glasbehälter entspricht.

6. Windbox nach einem der Ansprüche 2 bis 5, bei der die Verstelleinrichtung (6) in zwei Verstellbereiche (8, 9) aufgeteilt ist.

7. Windbox nach Anspruch 6, bei der mittels des einen Verstellbereichs (8) der Verstelleinrichtung (6) für jede einem Abschnitt der Abstellplatte (2) bzw. dem darauf abgestellten Glasbehälter zugeordnete Kammer (3, 4, 5) der Windbox (1) über eine dieser Kammer (3, 4, 5), vorzugsweise in deren unterem Bereich, zugeordnete erste Luftklappe (13) eine Grundeinstellung vorgebbar ist.

8. Windbox nach Anspruch 6 oder 7, bei der mittels des anderen Verstellbereichs (9) der Verstelleinrichtung (6) für jede einen Abschnitt der Abstellplatte (2) bzw. dem darauf abgestellten Glasbehälter zugeordnete Kammer (3, 4, 5) der Windbox (1) über eine dieser Kammer (3, 4, 5), vorzugsweise in deren oberem Bereich, zugeordnete zweite Luftklappe (15) eine Individualeinstellung vorgebbar ist.

9. Windbox nach Anspruch 8, bei der jeder zweiten Luftklappe (15) der Windbox (1) ein Steuer- bzw. Regelventil zugeordnet ist, das mittels einer Steuervorrichtung der Behälterglasmaschine steuer- bzw. regelbar ist.

10. Windbox nach einem der Ansprüche 5 bis 9, mit einer Messvorrichtung, mittels der in jeder ihrer Kammern (3, 4, 5) der Luftdruck und/oder der Volumenstrom messbar ist.

11. Windbox nach Anspruch 10, die zum Messen des Luftdrucks und/oder des Volumenstroms Manometer bzw. Durchflussmesser aufweist, deren Messwerte an der Verstelleinrichtung (6) ablesbar sind.

12. Windbox nach einem der Ansprüche 8 bis 11, bei der die erste (13) und die zweite Luftklappe (15) jeder ihrer Kammern (3, 4, 5) vertikal unterhalb der Vertikalachse des der jeweiligen Kammer (3, 4, 5) zugeordneten Glasbehälters angeordnet sind und jeder Glasbehälter durch in der Abstellplatte (2) ausgebildete Kühlbohrungen mit Kühlluft beaufschlagbar ist.

13. Windbox nach einem der Ansprüche 7 bis 12, bei der Verstellhebel (10) des einen Verstellbereichs (8) der Verstelleinrichtung (6) den ersten bzw. unteren Luftklappen (13) der Kammern (3, 4, 5) der Windbox (1) zugeordnet sind.

14. Windbox nach einem der Ansprüche 8 bis 13, bei der Verstellhebel (11) des anderen Verstellbereichs der Verstelleinrichtung (6) den zweiten bzw. oberen Luftklappen (15) der Kammern (3, 4, 5) der Windbox (1) zugeordnet sind.

15. Windbox nach einem der Ansprüche 8 bis 14, bei der jeder ersten bzw. unteren Luftklappe (13) und jeder zweiten bzw. oberen Luftklappe (15) der Windbox (1) jeweils ein Verstellhebel (10) des einen Verstellbereichs (8) bzw. ein Verstellhebel (11) des anderen Verstellbereichs (9) der Verstelleinrichtung (6) zugeordnet ist.
